# EUROPEAN PATENT SPECIFICATION

(11) **EP 2 087 087 B1**
(45) Date of publication and mention of the grant of the patent: **13.04.2016**
(21) Application number: 07834793.7
(22) Date of filing: 31.10.2007
(51) Int. Cl.: C11B 3/10, A23K 20/00, A23L 5/20, C11B 3/00

(54) **METHOD OF OIL PURIFICATION, AND USES THEREOF FOR FOOD AND FEED**
VERFAHREN ZUR ÖLREINIGUNG UND VERWENDUNGEN DAVON FÜR LEBENSMITTEL UND FUTTERMITTEL
PROCÉDÉ DE PURIFICATION D'HUILE, ET UTILISATIONS DE CELLE-CI POUR LES ALIMENTS ET L'ALIMENTATION

(30) Priority: 31.10.2006 NO 20064993
(43) Date of publication of application: 12.08.2009
(73) Proprietor: Due Miljo AS, 0283 Oslo (NO)
(72) Inventor: BERGÉ, Jean-Pascal, F-44311 Nantes Cedex 03 (FR); DELANNOY, Charles, F-62203 Boulogne Sur Mer Cedex (FR); DHALER, Didier, F-01708 Miribel Cedex (FR); RÆDER, Henrik, N-0314 Oslo (NO); GILBU TILSET, Bente, N-0314 Oslo (NO); TORP, Eddy, N-0216 Oslo (NO)
(74) Representative: Sønstevold, Anne
(86) International application number: PCT/NO2007/000385
(87) International publication number: WO 2008/054228

(56) References cited:
- EP-A1- 0 605 826
- EP-A1- 1 416 037
- EP-A2- 0 182 396
- EP-A2- 0 340 635
- WO-A1-00/09638
- WO-A1-01/42403
- WO-A1-02/06430
- WO-A1-99/64547
- CN-A- 1 857 089
- JP-A- 2005 213 309
- US-A1- 3 673 228
- US-A1- 4 735 815
- DATABASE WPI Week 198516, Derwent Publications Ltd., London, GB; AN 1985-096351, XP008109296 & JP 60 044597 A (KOIKE H) 09 March 1985
- CHU L-Y ET AL: "Enhanced Performance for Crossflow Microfiltration Processes with Tubular Ceramic Membrane", FILTRATION AND SEPARATION, ELSEVIER ADVANCED TECHNOLOGY, OXFORD, GB, vol. 37, no. 8, 1 October 2000 (2000-10-01), pages 36-40, XP004314023, ISSN: 0015-1882, DOI: 10.1016/S0015-1882(00)80078-6

## Description

### Field of the invention

The current invention describes a new process of purifying oils. In particular, the present invention relates to a method which combines treatment with ad- or absorbing agents (AAs) and a membrane-based process for separating the oil from the contaminated AAs. Further, the present invention relates to the use of ad- or absorbing agent and membrane filtration for purifying oil.

### Background of the invention

Persistant Bioaccumulating Toxins (PBTs) like PCBs and dioxins must be removed before utilizing oils for medical, dietetic, food, feed or surfactant purposes. In the near future, regulations regarding other PBTs are also expected. Some examples of such PBTs are brominated flame retardants, phtalates and organochloride pesticides.

Oils for dietetic or food application and animal feed must have a certain quality. It must not contain oxidation components (peroxide, free fatty acids), it must be clear at room temperature, have an acceptable taste and odour and conform to regulations with respect to PBTs.

### PBTs in flesh oils

The content of PBTs in fish oils depends on the concentrations of the relevant toxins in the living environment of the fish, the type of fish and the age of the fish when they are captured and/or harvested.

Regulations exist or are expected in the near future for the two PBT classes dioxins (including furans) and dioxin-like PCBs. Before purification, fish oils typically contain 2 - 20 pg/g of dioxins and furans (dioxins) and about twice that amount of dioxin-like PCBs (dl-PCBs).

Current EU limits for dioxins in oil for feed and food applications are 6 and 2 pg/g, respectively (Directive 2002/32/EC and 2003/100/EC).

EU commission Directive (2006/13/EC) sets new maximums levels for the SUM of dioxins and dl-PCBs in feed and food and will apply from 4 November 2006.
- Fish oil for feed: Sum: 24 ng/kg Dioxins and furans: 6 ng/kg Dioxin-like PCBs: 18 ng/kg
- Fish oil for food: Sum: 10 ng/kg Dioxins and furans: 2 ng/kg Dioxin-like PCBs: 8 ng/kg

Solving the problem by dilution with pure oils will not be allowed.

Consideration will be given by 31 Dec 2008 to significantly reduce the maximum levels for the SUM of dioxins and dl-PCBs and to dispense with the maximum levels for dioxin.

Investigations have shown that there will be a need to treat most of the Northern Hemisphere incl. European fish oil, both for feed and food use. The new regulation will therefore increase the market demand for efficient rinsing technologies for removing dl-PCBs and dioxins from oils for food and feed applications. It is expected that other PBTs, like brominated flame retardants, Polycyclic Aromatic Hydrocarbons (PAHs), phtalates and organochloride pesticides will be subject to regulations in the more distant future.

Dioxins are currently removed along with colour, taste and odorous compounds by using active carbon (AC) in a press filtration process. With a standard process of press filtration, the flow decreases very quickly due to the plugging of the filter supports. Most of the time, press filtration requires some filtering aid (precipitated silicas or kieselgur) to be added to the feed solution in addition to the AC. At the end of the filtration cycle a large amount of press cake composed of AC, filtering aid, filter and a substantial amount of oil is produced and must be discharged in an adapted dump. The process thus utilizes large amounts of AC and filtering aids, involves substantial product losses, and is both costly and time-consuming. New and improved processes which avoid the use of filtering aids, increase the amount of oil treated by each kg of AC and reduce the product (oil) losses are therefore sought.

Processes for dl-PCB removal are currently not fully implemented on an industrial scale. One emerging technology is molecular distillation, which may be used for both dl-PCB and dioxin removal from oils. During the process, the oil is heated to high temperatures. This might be detrimental to the quality of the oil. Another drawback is that the process requires large investments and large processing volumes. Centralised plants treating oils from many small producers are therefore envisaged. There is therefore a demand for smaller, cost-efficient processes, which may be installed for on-site oil treatment. A low-temperature process is also sought, as this will preserve the sensitive bioactive components such as vitamins, antioxidants and polyunsaturated fatty acids and avoid formation of unhealthy trans fatty acids.

### Microfiltration of oils

Microfiltration is a very well-known process for purifing and separating different components in aqueous solutions like milk or protein extracts from fish, soya or fruits. Bibliography shows that this technology has not been used much for oils, especially not for fish oils. The state-of-the-art mentions some patents and scientific publications on purification, refining and clarification of vegetable oils (Process for the purification of crude glyceride oil compositions: Iwama et al 1983, Patent No US4414157, Process for refining crude glyceride oils by membrane filtration: Achintuya Kumar Sen Gupta1977 Patent No US4062882 and Refining: Achintuya Kumar Sen Gupta 1985 Patent No US4533501, Soft purification of lampante olive oil by microfiltration : Abdellatif Hafidi, Daniel Pioch, Hamid Ajana. Food Chemistry 92 (2005) 17-22).

One patent describes a method for the separation of hydrophobic liquid phase with high melting compounds from butter. Michel Parmentier, Salina Bornaz, Bernard Journet : 1993 patent No FR2713656.

EP 0182396 describes oil purification involving the addition of adsorbent in combination with crossflow-filtration.

### Treatment of oils with ad- or absorbing agents (AAs)

Use of AC for removal of dioxins, taste, colour and odorous compounds from edible oils is a well-known technology. Use of AC to remove dioxins and PCBs has also been reported (Removal of dioxins and PCB from fish oil by AC and its influence on the nutritional quality of the oil: J. Maes et al. Journal of the American Oil Chemists Society, 82 (2005) 593-7). Use of AC has previously been combined with press filtration and steam distillation for removal of free fatty acids, as well as odorous and colour compounds (Process for purifying oils and fats; British Patent No GB707454 (1954) and Process for refining oils and fats; British Patent No GB707455 (1954)). To our knowledge, combined processes where AC or other AAs are used together with membrane filtration for oil purification have rarely been reported. One reason for this may be that polymer membranes are normally used for filtration of non-polar media like oils. Polymer membranes are quite susceptible to damage by abrasion. This precludes particulate AA circulation at turbulent flow, which is required to avoid rapid fouling of the membranes. Furthermore, removing oil and residues from plugged membranes requires higher temperatures and more aggressive chemicals than polymer membranes typically withstand. These problems can be avoided by using inorganic (ceramic) membranes, which can resist abrasion in turbulent flow, as well as the temperatures and chemicals required for cleaning the membranes.

Thus, there is a need for a new method of purifying oils, combining treatment with AA and membrane filtration, resulting in a total process with a better oil yield and lower cost than the classical technology using filter press.

### Description of the invention

The present invention provides a new method of purifying oils wherein
a) persistant bioaccumulating toxins (PBTs) such as PCB, dioxin-like PCB and dioxins are minimized,
b) important nutritional components such as vitamins, antioxidants and omega-3-fatty acids are preserved,
c) the content of high-melting, odour and colouring compounds is reduced,
d) the waste of oil is minimized leaving an efficient, cost-effective process, and
e) the equipment is modular, thus securing ease of on-site use for a wide range of processing volumes, as well as simple on-demand adjustment of processing capacity

Thus, the present invention provides a new method of purifying oils by combining the steps of ad- or absorbing agents (AAs) and membrane filtration according to claims 1-12. The AA is mixed with oil and circulated. Depending on oil properties and the absorbing process, heating or cooling may be applied. Membrane filtration is used to separate the purified oil from the contaminated AA.

An additional benefit is that some of the high-melting, odour and colouring compounds are removed and clear oils with less unwanted smell and colour are obtained at room temperature.

Compared to the current press filtration process, the benefits of our invention include: a) no use or loss of filter aid, b) less AA is used to rinse the same volume of oil, c) less product loss, d) removal of high-melting, smell and colouring compounds, e) longer duration of the filtration cycle before plugging occurs, and f) the residual AA can be recovered for regeneration or destruction, depending of the granulometry, by a simple decantation in a tank, by concentration in a horizontal decanter, by centrifugation, or by filtration on a filter press; the residual volume of AA/fish oil to final filtration will be less than 10% of the initial volume.

Compared to molecular distillation, the benefits of our invention are: a) lower energy costs, b) lower investment cost, c) modular plants that can be adjusted in smaller steps to the processing volumes at each production site, and d) lower processing temperature and thus better oil quality.

The present invention relates to a method of purifying oils by membrane filtration, wherein the method comprises the steps of
i) oil and powdered or granulated ad- or absorbing agent (AA) are filled into a feeding tank,
ii) a pump is used to circulate and pressurise the oil with AA through tubing to tubular ceramic membranes with a pore size smaller than the particle size of the AA where the purified oil permeate is separated from the retentate,
iii) the retentate is recycled to the feeding tank,
wherein the content of persistant bioaccumulating toxins (PBTs) are reduced by 20 - 100%, compared to the levels in the untreated oils.

In its most simple setup, oil and ad-or absorbing agents (AA) is filled into the tank, a pump is use to circulate and pressurise the oil with AA through tubing to a membrane where the purified oil permeate is separated from the retentate, which is recycled to the feeding tank.

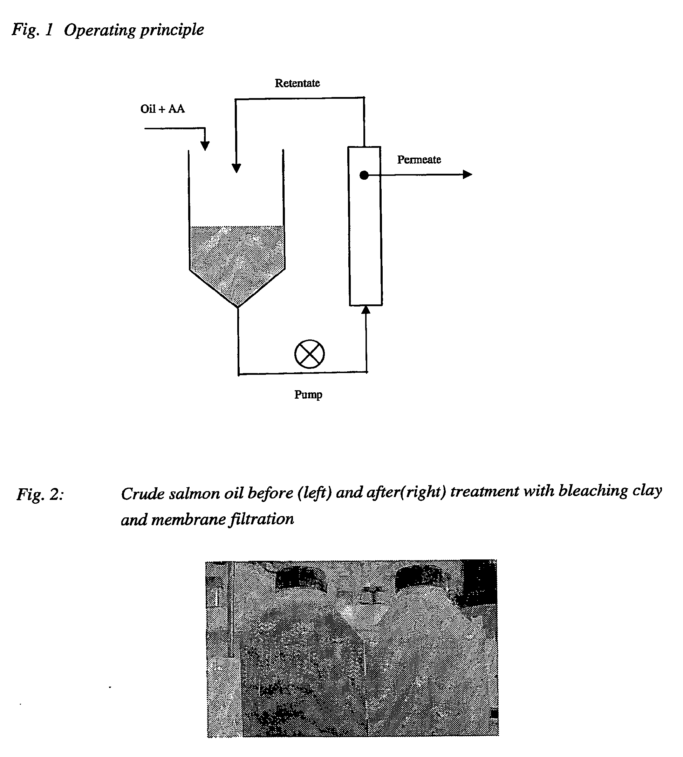

The operating principle is shown in Fig. 1.

Cooling and/or heating may be applied. The system and any variation thereof may have one or more membranes in series or parallel. The system can be open or closed. The oil may be covered with protective gas. AA may be added either together with the oil or separately. The process may be run either as a batch, semi-continuous or continuous process.

The temperature of the oil, with or without AA is adjusted to a level in the range from -20 to +150°C before and during processing. The actual temperature and preheating time after adding AA and before starting the separation process depends on oil viscosity and PBT absorption rate. Preheating time may be from 0 to 120 minutes, preferably between 20 and 60 min, with temperature preferably between 20° and 50°C.

The pumping speed must be adjusted so that the speed of oil along the membrane is within the range 1-20 m/s, preferable between 3 and 6 m/s. Permeate flows in the range 10 to 3500 l/h/m² have been achieved, most typically in the range 10 to 160 l/h/m² depending of type of oil, oil temperature, type and particle size of AA, state of the membrane, viscosity, recirculation speed and pressure. In one aspect of the process, intermittent back flushing or pulsing is applied.

The term ad- or absorbing agent (AA) as used herein is meant to include any solid substance that ab- or adsorbs unwanted compounds, such as by way of non-limiting example active carbon, bleaching clay, silica and zeolites. The AA used according to the present invention may be powdered or granulated. The quantity of AA depends of the type and particle size. If active carbon (AC) is used, the amount is preferably between 0.05 and 10 wt%, and more preferably in the range from 0.25 to 2 wt% of the initial mass of oil.

The membranes used in the present invention can be configured in accordance with any of the designs known to those skilled in the art, such as spiral wound, plate and frame, shell and tube, and derivative designs thereof. The membranes may be of cylindrical or planar geometry.

The membranes applicable in the present invention are formed from ceramic material that allows oil to pass through, while retaining the AA. The membranes can be made by any technique known to the art, including sintering, stretching, track etching, template leaching or phase inversion.

The membrane is prepared from one or several inorganic materials such as by way of non-limiting example aluminium oxide, silicon carbide, silicon oxide, zirconium oxide, titanium oxide or zeolites, using any technique known to those skilled in the art, such as sintering, leaching or sol-gel processes.

The membrane filtration process may be a microfiltration, ultrafiltration or nanofiltration process, or a combination of any of said membrane filtrations processes, performed in any order. The membranes are tubular ceramic membranes, with cut-off smaller than the particle size of the AA particles, and preferably between 0.01 and 50 µm. In one aspect of the invention the tubular membranes are having a pore size between 0,10 and 0,50 µm

The present invention provides a method of purifying oils according to claim 1. As such any unwanted material contaminating the oil could be removed. Examples of contaminants are persistant bioaccumulating toxins such as PCB and dioxin.

Persistant Bioaccumulating Toxins (PBTs) are chemical substances that are resistant to environmental degradation through chemical, biological, and photolytic processes. They persist in the environment, bioaccumulate in human and animal tissue, and have the potential for significant impacts on human health and the environment. Some examples of PBTs are: aldrin, chlordane, DDT, dieldrin, endrin, heptachlor, hexachlorobenzene, mirex, polychlorinated biphenyls (PCBs), dioxine-like PCBs, dioxins, and toxaphene, carcinogenic PAHs, heavy metal ions, and certain brominated flame-retardants, as well as some organometallic compounds such as tributyltin (PBT).

The term dioxin is used for a family of halogenated organic compounds, comprised of two benzene rings joined by either a single (furan) or a double oxygen bridge (dioxin). The most common dioxins are polychlorinated dibenzofurans (PCDFs) and polychlorinated dibenzodioxins (PCDDs). The toxicity of PCDD/Fs is dependent on the number and position of the chlorine atoms. 2,3,7,8-tetrachlorodibenzo-p-dioxin is the most toxic of the congeners. By convention, it is assigned a toxicity rating or toxic equivalence factor (TEF) of 1.0 with the remaining PCDD/Fs being assigned lower relative values.

### Structure of 2,3,7,8-tetrachlorodibenzo-p-dioxin

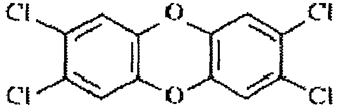

Polychlorinated biphenyls (PCBs) are a class of organic compounds with 1 to 10 chlorine atoms attached to biphenyl and a general chemical formula of C₁₂H₁₀₋ₓClₓ.

### General structure of PCBs

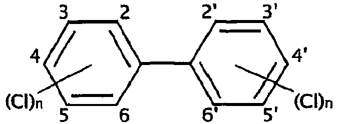

Dioxine-like PCBs (dl-PCBs) refer to PCBs with similar properties to those of dioxins. Some of them have TEFs as high as 0.1.

Polycyclic aromatic hydrocarbons (PAHs) are chemical compounds that consist of fused aromatic rings and do not contain heteroatoms or carry substituents. Some of them are known or suspected carcinogens.

Brominated flame-retardants comprise 70 synthetically produced variants with very varying chemical properties. There are several groups: polybrominated diphenyl ethers (PBDEs), polybrominated biphenyls (PCB) and brominated cyclohydrocarbons. Some are considered PBTs, but their effects are largely unknown and maximum levels are not yet decided.

Thus according to one aspect of the invention, the content of persistant bioaccumulating toxins (PBTs) are significantly reduced compared to the levels in the untreated oils. The content may be significantly reduced, by 20 - 100%, compared to the levels in the untreated oils. In one aspect of the present invention the PBTs to be reduced are PCBs, dl-PCBs and /or dioxins. In another aspect, the PBTs to be reduced are arsenic, PAHs and / or brominated flame retardants. In yet another aspect, the content of high melting compounds (HMCs), odour or colour components are present in the oil are significantly reduced to yield a clear and/or low smell oil at room temperature.

The oil to be purified according to the present invention may be any mineral or natural oil that contains unwanted amounts of PBTs. Examples of natural oils include, but are not limited to, those extracted from a wide variety of vegetables, animals, fish, marine organisms and micro organisms or any combination thereof.

Suitable vegetable oils include, but are not limited to, palm, soybean, sunflower, olive, peanut, sesame, rice bran, cashew, castor bean, flax, grape, hemp, mustard, poppy, rapeseed, canola, safflower, sesame seed, sunflower, almond, algal, apricot, argan, avocado, hazelnut, neem, peanut, pumpkin, and walnut oil, or any combination thereof.

Suitable animal oils include, but are not limited to, seal and whale oils or any combination thereof.

Suitable marine fish oils include, but are not limited to, anchovies, baikal oilfish, bloater, cacha, carp, cod, eel, eulachon, herring, hilsa, jack fish, katla, kipper, mackerel, orange roughy, pangas, pilchards, saithe, salmon, sardines, shark, sprats, swordfish, trout, tuna, whale, whitebait, krill and shellfish oil or any combination thereof.

Suitable freshwater fish oils, include, but are not limited to, tilapia, catfish, lake herring, black bass, carp, lake trout, salmon and whitefish oil or any combination thereof.

The marine and fresh water fish may be wild or cultured.

Suitable oils also include natural oils derived from micro organisms, including, but not limited to prokaryotic and eukaryotic single celled organisms.

The present invention will now be further described with reference to the following non-limitig examples.

### Embodiments

### Example 1: Removal of PCBs and dioxins from Fatty fish oil using AC and ceramic membrane with pore size 0.45µm

### Experimental setup:

14.7 kg of Fatty fish oil with 1000 ppm tocopherol from CTPP (Coopérative de Traitement des Produits de la Pêche) was mixed with 147 g Norit AC (particle size D50 = 36µm) and circulated through the system consisting of tank, pump, membrane and cooler. The membrane was a Kerasep membrane with pore size 0.45 µm, outer diameter 10 mm and length 400 mm. The flow was adjusted to 200 l/h. The pressure at the membrane inlet and outlet were 3.8 and 3.55 bars, respectively. The temperature in the tank was 28.5°C and the temperature at the pump and in the membrane was ≥ 40°C. After circulating for 1 hour, the permeate valve was opened and the permeate collected during 14 hours, distributed over a three-day period. (The equipment was stopped during the night.) Backflushing was applied every 70 s, with a duration of 5 s, utilising 4 bar pressurised air to drive a piston that transferred pressure to the permeate oil.

### Results:

An average flow of about 130 l/h/m² was achieved. 141 of oil was collected. No AC passed through the membrane. The permeate oil was more clear than the untreated oil, i.e. some high-melting compounds had been removed. The dioxin and PCB content was 0.36 and 12 pg/g, respectively. Thus, the levels have been significantly reduced compared to those of the untreated oil (9.5 and 23 pg/g for dioxin and PCB, respectively). For dioxin, the level is well below the current EU regulation for food (2 pg/g). For PCB, the level after treatment is lower than that of the new regulation for feed (18 pg/g).
After 23 months of storage, the oleic acidity of untreated oil was 4,76 %, while that of permeate was 3,75 %. Thus, AC + membrane filtration stabilizes the oil by removing destabilizing compounds, (possibly enzymes) that produce free fatty acids (FFAs).

### Example 2: Removal of PCBs and dioxins from Crude fish oil using AC and ceramic membrane with pore size 0.20 µm

### Experimental setup:

65kg of Fatty fish oil (extracted from a mix of different fatty fish) with 1000 ppm tocopherol from CTPP (Coopérative de Traitement des Produits de la Pêche) was mixed with 300 g of CECA AC (particle size D50 = 29 µm) and circulated through the system consisting of tank, pump, membrane. The pilot is equipped with a Kerasep ceramic membrane with pore size 0.20 µm and surface area 0.150 m². The pressure at the membrane inlet and outlet were 4.2 and 2.7 bars, respectively. The temperature in the tank was 30°C and the temperature at the pump and in the membrane was ≥ 40°C. After circulating for 15 min, the permeate valve was opened and the permeate collected during 6 hours.

### Results:

An average flow of about 17 l/h/m² was achieved. 161 of oil was collected.
No AC passed through the membrane. The permeate oil was more clear than the untreated oil, i.e. high-melting compounds had been removed. The dioxin and PCB content was 0.4 pg/g and 7.5 pg/g, respectively. Thus, the levels have been significantly reduced compared to those of the untreated oil (10 and 22 pg/g for dioxin and PCB, respectively). For dioxin, the level is well below the current EU regulation for food (2 pg/g). For PCB, the level after treatment is lower than the new regulation both for feed (18 pg/g) and food (8 pg/g) applications.

Further examples 3, 4, 5 were performed as outlined in the above experiments. The specific conditions and results are listed in table 1.

**Table 1: Summary of purification results for various tests, using different AC and membrane combinations**

| Ex. No. | Type of membrane | Type of oil | Amount and type of AC | Medium Permeate Flow l/h/m² | Duration of filtration | Start PCB pg/g | End PCB pg/g | Start dioxin pg/g | End dioxin pg/g |
|---|---|---|---|---|---|---|---|---|---|
| 1 | Kerasep 0.45 µm | Fatty fish oil | 0.5 wt% Norit | 130 | 14 h | 23 | 12 | 9,5 | 0,36 |
| 2 | Kerasep 0.20 µm | Fatty fish oil | 0.5 wt% Ceca | 17 | 6h | 22 | 7.5 | 10 | 0.4 |
| 3 | Kerasep 0.45 µm | Fatty fish oil | 0.5 wt% Ceca | 22 | 4h | 26 | 7.5 | 9,5 | 0.39 |
| 4 | Kerasep 0.20µm | Fatty fish oil | 0.5 wt% Ceca | 17 | Average sample gathered during 5 hours | 26 | 8.6 | N.A. | N.A. |
| 5 | Kerasep | Fatty fish | 0.5 wt% | 32 | 2 h | 26 | 8.3 | 9.5 | 0.25 |
| | 0.20 µm | oil | Norit | | 4 h | 26 | 7.5 | | |
| 6 | Kerasep 0.20 µm | Fatty fish oil | 1.0 wt% Ceca | 10 | 4 h | 30 | 14.9 | 12.5 | 2.3 |

| | | | | | | | | | |
|---|---|---|---|---|---|---|---|---|---|
| N.A. Data not available | | | | | | | | | |

In example no.6, the contents of other pollutants were also measured and decreased values found as follows:

| Compound | Start | End |
|---|---|---|
| Arsenic | 5.5 mg/kg | 4 ppm |
| *PAH:* Chrysen/Tryphenylen | 1.8 µg/kg | 0.5 µg/kg |
| *PAH:* Benzo-(a)-anthracene | 0.7 µg/kg | <0.5 µg/kg |
| *PAH:* Benzo-(b)-fluoranthene | 0.7 µg/kg | <0.5 µg/kg |
| *PAH:* Benzo(ghi)-perylene | 0.6 µg/kg | <0.5 µg/kg |
| *Flame retardant:* Tetrabrominated diphenyl ethers (total) | 22.4 µg/kg | 20.9 µg/kg |
| *Flame retardant:* Pentabrominated diphenyl ethers (total) | 6.19 µg/kg | 5.38 µg/kg |
| *Flame retardant:* Hexabrominated diphenyl ethers (total) | 2.73 µg/kg | 2.44 µg/kg |

For mercury, cadmium, lead, cyclopenta(cd)pyrene, and benzo(k/j)fluoranthene, the values were below the detection limits of the analytical method and no conclusions could be reached. For brominated biphenyls (BBs), values were either unchanged (total hexa BB) or below the detection limits (6 other BB groups). For 9 other brominated diphenyl ethers (BDEs), the values are either unchanged (3) or below the detection limit (6). For 8 other PAHs, the values were below the detection limits.

### Example 7: Removal of PCBs and dioxins from Seal oil using AC and ceramic membrane with pore size 0.20 µm

### Experimental setup:

75 kg of Seal oil was mixed with 1 wt% CECA AC and circulated through the system consisting of tank, pump, membrane. The processing unit is equipped with a one housing with seven Membralox SCT membranes with pore size 0.20 µm and total surface area 1,4 m². The pressure at the membrane inlet and outlet were 3.6 and 3.2 bars, respectively. The temperature was 60°C. After circulating for 60 min, the permeate valve was opened and the permeate collected during 5 hours.

### Results:

An flow of 2,2 to 5 l/h/m² was achieved. 501 of oil was collected.
No AC passed through the membrane. The dioxin content was reduced from 0,844 pg/g to 0,206 pg/g and the PCB content from 6,51 pg/g to 2,45 pg/g. Thus, the levels have been significantly reduced to levels well below the new EU regulations for food.

### Example 8: Removal of colour compounds from salmon oil using bleaching clay and ceramic membrane with pore size 0.20 µm

### Experimental setup:

75 kg of crude salmon oil from CTPP (Coopérative de Traitement des Produits de la Pêche) was mixed with 3 volume % TONSIL bleaching clay and circulated through the system consisting of tank, pump, membrane. The processing unit is equipped with a one housing with seven Membralox SCT membranes with pore size 0.20 µm and total surface area 1,4 m². The pressure at the membrane inlet and outlet were 1.5 and 0.5 bars, respectively. The temperature was 60°C. After circulating for 90 min, the permeate valve was opened and the permeate collected during 3 hours.

### Results:

An average flow of 26 l/h/m² was achieved. 501 of oil was collected.
No bleaching clay passed through the membrane. The colour of the salmon oil changed from dark orange to yellow (See Fig. 2) after treatment and membrane filtration, i.e. colour compounds had been removed.

As apparent from the above examples, a significant amount of unwanted compounds are removed from the oils of interest by combining the use of ad- or absorbing agents (AAs) with membrane filtration.

## Claims

1. Method of purifying oils by membrane filtration, wherein the method comprises the steps of
i) oil and powdered or granulated ad- or absorbing agent (AA) are filled into a feeding tank,
ii) a pump is used to circulate and pressurise the oil with AA through tubing to tubular ceramic membranes with a pore size smaller than the particle size of the AA where the purified oil permeate is separated from the retentate,
iii) the retentate is recycled to the feeding tank,
wherein the content of persistant bioaccumulating toxins (PBTs) are reduced by 20 - 100%, compared to the levels in the untreated oils.

2. Method according to claim 1, wherein the tubular ceramic membranes have a pore size between 0.01 and 50 µm, preferably between 0.10 and 0.50 µm.

3. Method according to claim 1, wherein the PBTs are polychlorinated biphenyls (PCB), dioxine-like PCB and /or dioxin.

4. Method according to claim 1, wherein the PBTs are arsenic, polycyclic aromatic hydrocarbons and / or brominated flame retardants.

5. Method according to claim 1, wherein the oil is derived from a marine source, preferably fish.

6. Method according to claim 1, wherein the oil is derived from an animal source.

7. Method according to claim 1, wherein the oil is derived from a vegetable source.

8. Method according to claim 1, wherein the oil is derived from a mineral source.

9. Method according to claim 1, wherein said membrane filtration is selected from microfiltration, ultrafiltration or nanofiltration, or a combination of any of said membrane filtrations, performed in any order.

10. Method according to claim 1, wherein one or more membranes are coupled together in series or parallel.

11. Method according to claim 1, wherein the process is run as a batch, semi-continuous or continuous process.

12. Method according to claim 1, wherein the process is run applying intermittent back flush or pulsing conditions.

## Patentansprüche

1. Verfahren zur Reinigung von Ölen durch Membranfiltration, wobei das Verfahren ferner die Schritte umfasst:
i) Öl und ein pulverisiertes oder granuliertes Ad- oder Absorbierungsmittel (AA) werden in einen Speisetank eingefüllt,
ii) eine Pumpe wird verwendet, um das Öl mit dem AA durch Rohrleitungen zu röhrenförmigen Keramikmembranen mit einer kleineren Porengröße als die Teilchengröße des AA, wo das gereinigte Öl-permeat vom Retentat getrennt wird, zirkulieren zu lassen und unter Druck zu setzen,
iii) das Retentat wird zum den Speisetank zurückgeführt,
wobei der Gehalt an persistenten bioakkumulierenden Toxinen (PBTs) um 20 - 100 %, verglichen zum Gehalt in unbehandelten Ölen, reduziert wird.

2. Verfahren nach Anspruch 1, wobei die röhrenförmigen Keramikmembranen eine Porengröße zwischen 0,01 und 50 µm, vorzugsweise zwischen 0,10 und 0,50 µm aufweisen.

3. Verfahren nach Anspruch 1, wobei die PBTs polychlorierte Biphenyle (PCB), dioxinähnliche PCB und/oder Dioxin sind.

4. Verfahren nach Anspruch 1, wobei die PBTs Arsen, polyzyklische aromatische Kohlenwasserstoffe und/oder bromierte Flammschutzmittel sind.

5. Verfahren nach Anspruch 1, wobei das Öl aus einer marinen Quelle, vorzugweise Fisch, stammt.

6. Verfahren nach Anspruch 1, wobei das Öl aus einer tierischen Quelle stammt.

7. Verfahren nach Anspruch 1, wobei das Öl aus einer pflanzlichen Quelle stammt.

8. Verfahren nach Anspruch 1, wobei das Öl aus einer mineralischen Quelle stammt.

9. Verfahren nach Anspruch 1, wobei die Membranfiltration aus Mikrofiltration, Ultrafiltration oder Nanofiltration oder einer beliebigen Kombination aus diesen Membranfiltrationen, durchgeführt in beliebiger Reihenfolge, ausgewählt ist.

10. Verfahren nach Anspruch 1, wobei eine oder mehrere Membranen in Reihe oder parallel geschaltet sind.

11. Verfahren nach Anspruch 1, wobei der Prozess als diskontinuierlicher, semikontinuierlicher oder kontinuierlicher Prozess durchgeführt wird.

12. Verfahren nach Anspruch 1, wobei der Prozess durch Anlegen intermittierender Rückspül- oder Pulsierbedingungen durchgeführt wird.

## Revendications

1. Procédé pour la purification des huiles par la filtration sur membrane, dans lequel le procédé comprend les étapes consistant à
i) ce que l'huile et l'agent ad- ou absorption (AA) en poudre ou granulé sont introduits dans un réservoir d'alimentation,
ii) ce qu'une pompe est utilisée pour faire circuler et pressuriser l'huile avec l'AA à travers le tubage à des membranes tubulaires en céramique ayant une taille de pores inférieure aux dimensions de particule de l'AA, le perméat de l'huile purifiée étant séparé du retentât,
iii) ce que le retentât est recyclé dans le réservoir d'alimentation,
dans lequel la teneur en toxines bioaccumulables persistantes (PBT) est réduite de 20 à 100%, par rapport aux niveaux dans les huiles non traitées.

2. Procédé selon la revendication 1, dans lequel les membranes tubulaires en céramique présentent une taille de pores comprise entre 0,01 et 50 µm, de préférence entre 0,10 et 0,50 µm.

3. Procédé selon la revendication 1, dans lequel les substances PBT sont des diphényles polychlorés (PCB), PCB de type dioxine et/ou la dioxine.

4. Procédé selon la revendication 1, dans lequel les substances PBT sont l'arsenic, les hydrocarbures aromatiques polycycliques et/ou des retardateurs de flamme bromés.

5. Procédé selon la revendication 1, dans lequel l'huile est dérivée d'une source marine, de préférence de poisson.

6. Procédé selon la revendication 1, dans lequel l'huile est dérivée d'une source animale.

7. Procédé selon la revendication 1, dans lequel l'huile est dérivée d'une source végétale.

8. Procédé selon la revendication 1, dans lequel l'huile est dérivée d'une source minérale.

9. Procédé selon la revendication 1, dans lequel ladite filtration sur membrane est choisie parmi la microfiltration, l'ultrafiltration ou la nanofiltration, ou une combinaison de l'une quelconque desdites filtrations sur membrane, effectuées dans un ordre quelconque.

10. Procédé selon la revendication 1, dans lequel une ou plusieurs membranes sont couplées entre elles en série ou en parallèle.

11. Procédé selon la revendication 1, dans lequel le procédé est exécuté en tant que traitement par lots, en semi-continu ou continu.

12. Procédé selon la revendication 1, dans lequel le procédé est exécuté en appliquant des conditions de reflux ou pulsation intermittentes.
